# EUROPEAN PATENT SPECIFICATION

(11) **EP 1 157 880 B1**
(45) Date of publication and mention of the grant of the patent: **30.11.2005**
(21) Application number: 00500181.3
(22) Date of filing: 07.08.2000
(51) Int. Cl.: B60N 2/28, A47D 13/02

(54) **Child seat**
Kindersitz
Siège pour enfant

(30) Priority: 25.05.2000 ES 200001389 U
(43) Date of publication of application: 28.11.2001
(73) Proprietor: PLAY, S.A., 08184 Palau de Plegamans (Barcelona) (ES)
(72) Inventor: Jane Stopp, Joaquim, 08184 Palau de Plegamans (ES)
(74) Representative: Ponti Sales, Adelaida

(56) References cited:
- EP-A- 0 853 018
- GB-A- 2 268 394
- US-A- 4 915 446
- US-A- 5 890 762
- US-A- 6 017 088

## Description

This invention relates to a child seat, which can be used as a pushchair and as a seat for travelling in a car, in which the backrest can be placed in different positions.

### BACKGROUND OF THE INVENTION

Known in the art are child seats which are habitually used for taking children from one place to another on short trips. These chairs are also suitable when the child has to remain for a certain time in a place, for example in order to travel in a car.

Utility model ES-U/9801789, from the same applicant as this application, discloses a pushchair for children, which comprises a seat of the aforesaid type, which is detachably coupled to a structure provided with wheels. A pushchair for children is thus achieved simply by attaching the seat to said structure provided with wheels, and a child seat by removing it from said structure.

However, that type of child seat has the drawback that its structure is rigid and does not allow the backrest to be placed in different positions, and this can involve discomfort for the child.

Moreover, these currently known seats which are used in automobiles are specially designed for use by children within certain weight ranges, which means that the seat must be changed when the child exceeds a certain weight, see also EP-A-0 853 018, column 2, lines 48 to 50, which provides a child seat which can be consistently used for children of various ages from babyhood to childhood . These seats must undergo various checks for official approval, thus ensuring that they comply with statutory safety requirements. More specifically, child seats for automobiles are divided into four groups:
Group 0: Permits use thereof by a child of up to 10 kg (up to 9 months approximately);
Group 0+: Permits use thereof by a child of up to 13 kg (up to 18 months approximately);
Group 1: Permits use thereof by a child of a weight between 9 and 18 kg (between 9 months and 4 years approximately); and
Group 2-3: Permits use thereof by a child of a weight between 15 and 36 kg (between 9 months and 4 years approximately).

EP-A-0 853 018, which is considered the closest prior art, discloses a vehicular child safety which comprises a seat portion and a reclined backrest.

US-A-6 017 088 discloses an infant restraint system including an infant carrier, a base couplable to the infant via a locking mechanism and having a recline mechanism.

US-A-4 915 446 discloses an infant seat, a removable seat and a seat latch. The seat is usable as a car seat and the base securable to an automobile seat with a seat belt.

### DESCRIPTION OF THE INVENTION

The child seat of the invention manages to resolve the aforesaid drawbacks, while presenting other advantages which will be described below.

The child seat of the invention also includes a backrest articulated onto that base structure and means for graduating the inclination and fixing said backrest in a plurality of positions with different inclination.

Thanks to regulation of the backrest, a chair is achieved which permits the child to go in different positions for greater comfort. In addition, it permits a single chair to be used for a longer time, since the chair of the invention is equivalent to groups 0 and 0+ of automobile chairs described above, complying with all safety requirements.

Moreover, it permits the child to lie stretched out when the chair of the invention is placed on the front seat of the vehicle, unlike the present seats, in which the child must remain sitting up when placed in the front seat of the vehicle.

According to the invention, said means for graduating the inclination and fixing said backrest are made up of a rod attached to the backrest whose ends can be moved along guides provided in the base structure, with each one of said guides including a plurality of housings which determine the positions in which the backrest is fixed, by inserting into said housings a stop-piece provided at the ends of the rod, it being possible to remove said stop-piece from the interior of said housings against the action of elastic means.

According to an advantageous embodiment of the invention, Et includes an operating lever, which in the operating position withdraws the stop-pieces provided on the ends of the rod from said housings.

Thanks to this feature, graduation of the inclination of the backrest can be carried out easily and conveniently simply by acting upon the operating lever, which leads to simultaneous withdrawal of the two stop-pieces provided on the ends of said rod.

According to a preferred embodiment of the invention, said operating lever is linked to the stop-pieces through a filament.

In order to provide easy access thereto, said operating lever is provided on the top part of said articulated backrest.

According to an advantageous embodiment of the invention, the child seat includes a set of straps for securing the child using the seat to same, said system of straps being made up of a pair of straps running longitudinally the length of the backrest and attached by their bottom part by means of a buckle, and an additional strap provided on one of the ends of the complementary part of the aforesaid buckle and the other end being fixed to the base structure, with said additional strap being fitted around the upper part of said rod. Thanks to the arrangement of this additional strap, its tension can be adjusted automatically by varying the inclination of the backrest, which does not disturb the child using the chair of the invention.

Advantageously, said handle rotates with respect to the base structure, so that it can adopt any position between two opposing horizontal positions.

Preferably, said handle includes a grab-handle on its top part, this grab-handle being gyratory with respect to the handle and capable of adopting a substantially perpendicular position with respect to the handle.

### BRIEF DESCRIPTION OF THE DRAWINGS

For a better understanding of all that has been outlined, some drawings are attached which, schematically and solely by way of non-restrictive example, show a practical case of embodiment of the child seat of the invention.

Figure 1 is a perspective view of the seat of the invention, with the backrest in its upper position;

Figure 2 is a perspective view similar to that of Figure 1, with the backrest in its lower position;

Figure 3 is a side elevation view of the child seat of the invention;

Figure 4 is a front elevation view of the detail of the operating lever shown in Figure 3;

Figure 5 is a schematic view showing, in their rest position, the means for graduating and fixing the inclination of the backrest; and

Figure 6 is a schematic view showing, in their operating position, the means for graduating and fixing the inclination of the backrest.

### DESCRIPTION OF THE PREFERRED EMBODIMENT

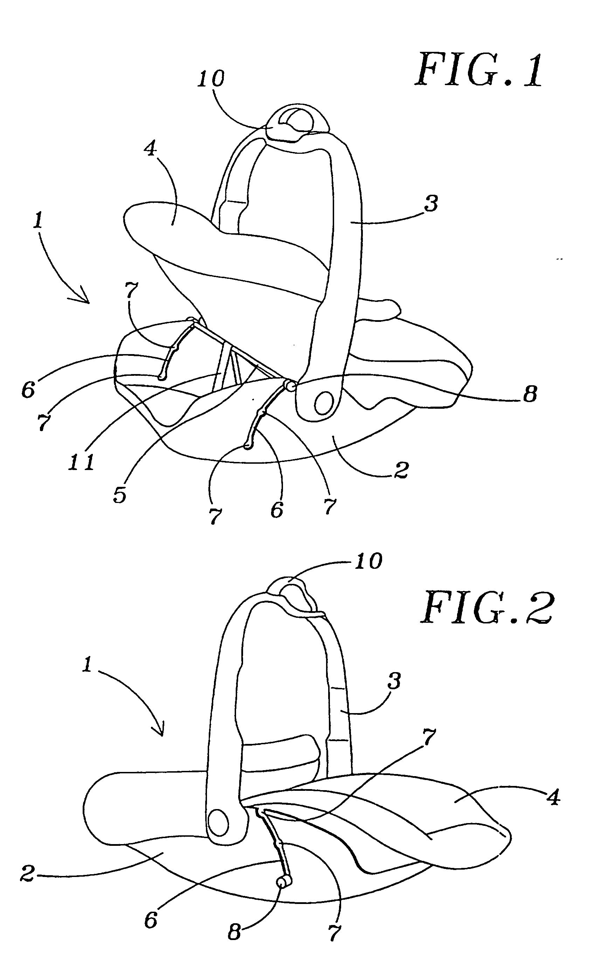

As can be seen in Figure 1, the child seat of the invention, identified in general by means of reference number 1, comprises a base structure 2, a backrest 4 and a handle 3.

Said backrest 4 is articulated onto said base structure 2, it being possible to graduate the inclination of same and fix the backrest 4 in a particular position.

The graduation and fixing of the inclination of the backrest 4 is carried out by means of a rod 5 attached to same, the ends of which slide along the guides 6 provided in the base structure 2. Said guides 6 include a plurality of housings 7 (three in the case of the embodiment shown) in which the position of the backrest 4 can be fixed.

Fixing of the backrest 4 in position is carried out through a pair of stop-pieces 8, each provided on one end of the rod 5, which stop-pieces are inserted into said housings 7. Each stop-piece 8 is associated with a spring 9, which keeps said stop-pieces 8 housed inside the housings 7 in the rest position.

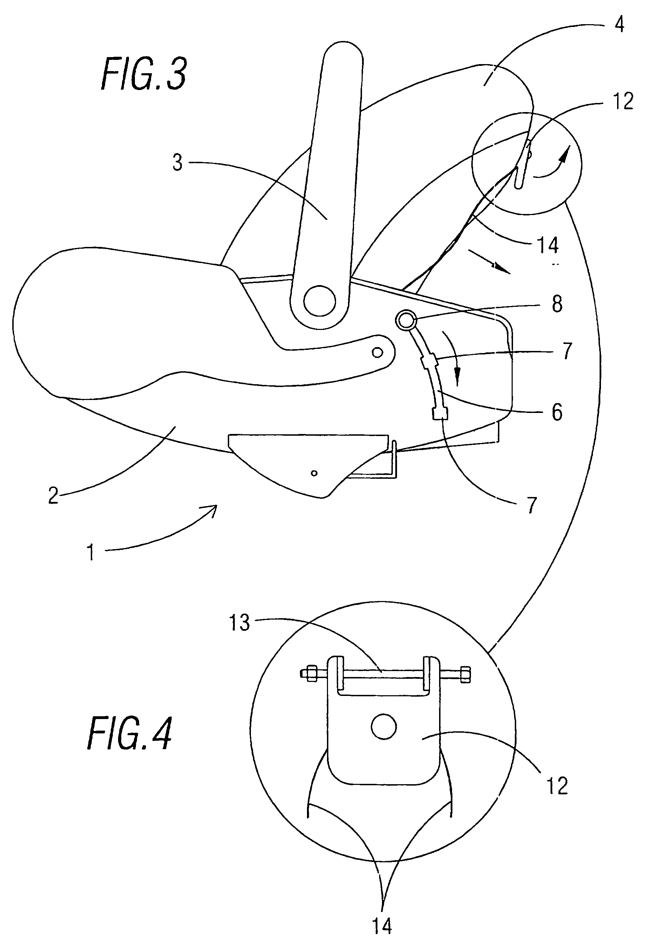

To graduate the position of the backrest, the stop-pieces must be withdrawn and replaced in the housings 7. For this, the child seat of the invention includes an operating lever 12 situated on the upper part of the backrest 4, it being articulated onto same around a spindle 13, as can be seen in Figures 3 to 6. Said operating lever 12 is attached to the stop-pieces through a filament 14.

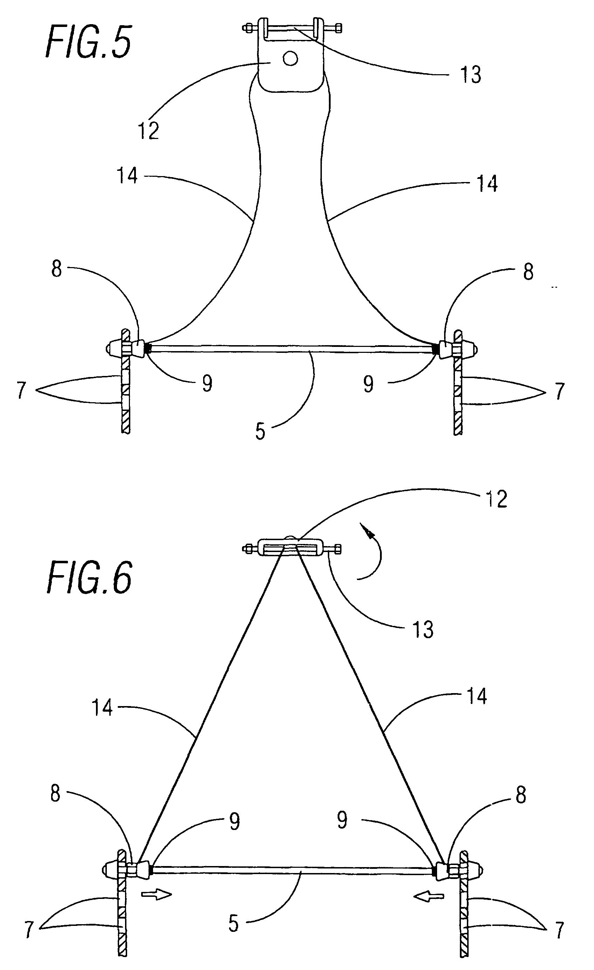

Figure 5 shows the rest position, in which the backrest is fixed in a particular position. As stated above, in this case the stop-pieces 8 are fitted inside the housings 7 thanks to the action of the springs 9.

When the user wishes to change the position of the backrest 4, the operating lever 12 has to be actuated by rotating it around the spindle 13 as indicated by the arrows in Figures 3 and 6. This rotation of the operating lever 12 causes the filament 14 to tense completely, pulling the stop-pieces 8 until they come out of the housings 7 (Figure 6). It is in this position that the position of the backrest 4 can be adjusted manually until it adopts the desired inclination.

When the backrest 4 is in the desired position, the operating lever 12 simply has to be released, and it will then return to its rest position under the action of a spring (not shown) fitted between said lever 12 and the spindle 13. When the lever 12 is released, it will return to the rest position shown in Figure 5 and the backrest 4 will remain fixed in the desired position.

The child seat 1 according to an embodiment of the invention also includes a grab-handle 10 fitted on the top part of the handle 3, with said grab-handle being gyratory with respect to the handle 3, in such a way that it can adopt a substantially transversal position with respect to same, thus facilitating carrying the seat. Furthermore, the handle 3 is articulated onto the base structure 2, and can be fixed in different positions.

The seat according to an embodiment of the invention also includes a set of straps to secure the child using the seat onto same. This system of straps is made up of a pair of straps (not shown) running longitudinally the length of the backrest and attached at their lower part by means of a buckle, and an additional strap 11 provided at one of its ends with the complementary part of the aforesaid buckle, while the other end is attached to the base structure 2, said additional strap 11 being fitted around the top part of said rod 5.

Despite the fact that reference has been made to a specific embodiment of the invention, is will be obvious to a person skilled in the art that the child seat described is susceptible of many variations and modifications, and that all the details mentioned may be replaced by others that are technically equivalent, without departing from the scope of protection defined by the attached claims.

## Claims

1. Child seat (1), which comprises a base structure (2) and a handle (3) and it also includes a backrest (4) articulated onto that base structure (2) and means for graduating the inclination and fixing said backrest (4) in a plurality of positions with different inclinations with respect to the base structure (2),
**characterised in that** said means for graduating the inclination and fixing said backrest are made up of a rod (5) attached to the backrest (4) whose ends can be moved along guides (6) provided in the base structure (2), with each one of said guides (6) including a plurality of housings (7) which determine the positions in which the backrest (4) is fixed, by inserting into said housings (7) a stop-piece (8) provided on the ends of the rod (5), it being possible to remove said stop-piece (8) from the interior of said housings (7) against the action of elastic means (9).

2. Child seat at claimed in Claims 1, **characterised in that** it includes an operating lever (12), which in the operating position withdraws the stop-pieces (8) provided on the ends of the rod (5) from said housings (7).

3. Child seat as claimed in Claim 2, **characterised in that** said operating lever (12) is linked to the stop-pieces (8) through a filament (14).

4. Child seat, as claimed in Claim 2 or Claim 3, **characterised in that** said operating lever (12) is provided on the top part of said articulated backrest (4).

5. Child seat as claimed in Claim 1, which includes a set of straps for securing the child using the seat to same, **characterised in that** said system of straps is made up of a pair of straps running longitudinally the length of the backrest (4) and attached by their bottom part by means of a buckle, and an additional strap (11) provided on one of the ends of the complementary part of the aforesaid buckle and the other end being fixed to the base structure (2), with said additional strap (11) being fitted around the upper part of said rod (5).

6. Child seat as claimed in Claim 1, **characterised in that** said handle (3) rotates with respect to the base structure (2), so that it can adopt any position between two opposing horizontal positions.

7. Child seat as claimed in Claim 6, **characterised in that** said handle (3) includes a grab-handle (10) on its top part.

8. Child seat as claimed in Claim 7, **characterised in that** said grab-handle (10) is gyratory with respect to the handle (3) and capable of adopting a substantially perpendicular position with respect to the handle (3).

## Patentansprüche

1. Kindersitz (1) mit einem Unterteilaufbau (2) und einer Handhabe (3) und ferner mit einer Rückenstütze (4), die auf dem Unterteilaufbau (2) gelenkig gelagert ist, und mit einer Einrichtung zum Abstufen der Neigung und Fixieren der Rückenstütze (4) in einer Vielzahl von Stellungen mit unterschiedlichen Neigungen bezüglich des Unterteilaufbaus (2),
**dadurch gekennzeichnet,**
**dass** die Einrichtung zum Abstufen der Neigung und zum Befestigen der Rückenstütze aus einer an der Rückenstütze (4) angebrachten Stange (5) besteht, deren Enden entlang von in dem Unterteilaufbau (2) vorgesehenen Führungen (6) bewegbar sind, wobei jede der Führungen (6) eine Vielzahl von Aufnahmen (7), die die Stellungen, in denen die Rückenstütze (4) befestigt ist, durch Einsetzen in die Aufnahmen (7) festlegen, und ein Anschlagteil (8) aufweisen, das an den Enden der Stangen (5) vorgesehen ist, wobei das Anschlagteil (8) von der Innenseite der Aufnahme (7) gegen die Wirkung einer elastischen Einrichtung (9) entfernbar ist.

2. Kindersitz nach Anspruch 1, **dadurch gekennzeichnet, dass** er einen Betätigungshebel (12) aufweist, der in der Betätigungsstellung die Anschlagteile (8), die auf den Enden der Stange (5) vorgesehen sind, aus den Ausnehmungen (7) zurückzieht.

3. Kindersitz nach Anspruch 2, **dadurch gekennzeichnet, dass** der Betätigungshebel (12) an den Anschlagteilen (8) über einen Faden angelenkt ist.

4. Kindersitz nach Anspruch 2 oder Anspruch 3, **dadurch gekennzeichnet, dass** der Betätigungshebel (12) auf dem oberen Abschnitt der angelenkten Rückenstütze (4) vorgesehen ist.

5. Kindersitz nach Anspruch 1, der einen Satz von Gurten zum Sichern des Kindes, welches den Sitz benutzt, an diesem besitzt, **dadurch gekennzeichnet, dass** das System von Gurten aus einem Paar Gurten, die in Längsrichtung über die Länge der Rückenstütze (4) verlaufen und an ihrem unteren Abschnitt mittels eines Gurtschlosses angebracht sind, und einem zusätzlichen Gurt (11) bestehen, der an einem der Enden des komplementären Abschnitts des zuvor erwähnten Gurtschlosses vorgesehen und dessen anderes Ende an dem Unterteilaufbau (2) befestigt ist, wobei der zusätzliche Gurt (11) um den oberen Abschnitt der Stange (5) befestigt ist.

6. Kindersitz nach Anspruch 1, **dadurch gekennzeichnet, dass** die Handhabe (3) bezüglich des Unterteilaufbaus (2) derart drehbar ist, dass sie jede Stellung zwischen zwei gegenüberliegenden horizontalen Stellungen einnimmt.

7. Kindersitz nach Anspruch 6, **dadurch gekennzeichnet, dass** die Handhabe (3) einen Handgriff (10) auf ihrem oberen Abschnitt aufweist.

8. Kindersitz nach Anspruch 7, **dadurch gekennzeichnet, dass** der Handgriff (10) bezüglich der Handhabe (3) drehbar und eine im wesentlichen senkrechte Stellung bezüglich der Handhabe (3) einzunehmen vermag.

## Revendications

1. Siège pour enfant (1), comprenant une structure de base (2) et une anse (3), et comprenant en outre un dossier (4) articulé sur cette structure de base (2) ainsi que des moyens destinés à graduer l'inclinaison et, à fixer ledit dossier (4) dans une pluralité de positions avec diverses inclinaisons par rapport à la structure de base (2),
**caractérisé en ce que** lesdits moyens destinés à graduer l'inclinaison et à fixer ledit dossier sont constitués d'une tige (5) reliée au dossier (4), dont les extrémités peuvent être déplacées le long de guides (6) prévus dans la Structure de base (2), chacun desdits guides (6) comprenant une pluralité de logements (7) qui déteiminent les positions dans lesquelles le dossier (4) est fixé, par insertion dans lesdits logements (7) d'une pièce de butée (8) prévue sur les extrémités de la tige (5), ladite pièce de butée (8) pouvant être retirée de l'intérieur desdits logements (7) contre l'action, de moyens élastiques (9).

2. Siège pour enfant selon la revendication 1, **caractérise en ce qu'**il comprend un levier d'actionnement (12) lequel, dans la position d'actionnement, retire desdits logements (7) les pièces de butée (8) prévues sur les extrémités de la tige (5).

3. Siège pour enfant selon la revendication 2, **caractérisé en ce que** ledit levier d'actionnement (12) est relié aux pièces de butée (8) à travers un filament (14).

4. Siège pour enfant selon la revendication 2 ou 3, **caractérisé en ce que** ledit levier d'actionnement (12) est prévu sur la partie supérieure dudit dossier articulé (4).

5. Siège pour enfant selon la revendication 1, comprenant un ensemble de courroies destinées à attacher l'enfant utilisant le siège à ce dernier, **caractérisé en ce que** ledit système de courroies est constitué d'une paire de courroies s'étendant longitudinalement sur la longueur du dossier (4) et fixées par leur partie inférieure au moyen d'une boucle, ainsi que d'une courroie supplémentaire (11) prévue sur une des extrémités de la partie complémentaire de ladite boucle et l'autre extrémité étant fixée à la structure de base (2), ladite courroie supplémentaire (11) étant ajustée autour de la partie supérieure de ladite tige (5).

6. Siège pour enfant selon la revendication 1, **caractérisé en ce que** ladite anse (3) pivote par rapport à la structure de base (2), de sorte qu'elle peut adopter n'importe quelle position entre deux positions horizontales opposées.

7. Siège peur enfant selon la revendication 6, **caractérisé en ce que** ladite anse (3) comprend une poignée (10) sur sa partie supérieure.

8. Siège pour enfant selon la revendication 7, **caractérisé en ce que** ladite poignée (10) est giratoire par rapport à l'anse (3) et qu'elle peut adopter une position sensiblement perpendiculaire par rapport à l'anse (3),
